# EUROPÄISCHE PATENTANMELDUNG

(11) **EP 1 319 503 A1**
(43) Veröffentlichungstag der Anmeldung: **18.06.2003**
(21) Anmeldenummer: 02026972.6
(22) Anmeldetag: 04.12.2002
(51) Int. Cl.: B32B 27/40, B32B 5/28, B32B 17/04, B32B 31/00

(54) **Verbundteile aus Deckschichten und Polyurethan-Sandwichmaterialien und ihre Herstellung**

(30) Priorität: 17.12.2001 DE 10161980; 01.07.2002 DE 10229473
(71) Anmelder: BAYER AG, 51368 Leverkusen (DE)
(72) Erfinder: Haas, Peter, Dr., 42781 Haan (DE); Paul, Reiner, Dr., 42799 Leichlingen (DE); Guarnieri, Walter, Dr., 39032 Sand inTaufers (BZ) (IT); Lammeck, Adolf, Dr., 53797 Lohmar (DE)

(57) **Zusammenfassung**

Gegenstand der Erfindung sind Verbundteile aus Deckschichten und Polyurethan-Sandwichmaterialien, ein Verfahren zu deren Herstellung und ihre Verwendung.

## Beschreibung

Gegenstand der Erfindung sind Verbundteile aus Deckschichten und Polyurethan-Sandwichmaterialien, ein Verfahren zu deren Herstellung und ihre Verwendung.

Werkstoffteile im Automobilaußenbereich mit class-A Oberflächen und besonderer mechanischer Funktion sind meist aus Metall gefertigt. Nachteilig ist hier das hohe Eigengewicht dieser Teile. Im Vordergrund als Kriterium für die Oberflächengüte steht das an sich bekannte Wave-Scan-Verhalten mit geringen Werten für die Kurzund Langwelligkeit der Oberfläche.

Bei Einsatz von Werkstoffen aus Polyurethan bedient man sich meist kompakter Materialien mit Verstärkungsstoffen, um spezifische mechanische Eigenschaften, wie z.B. die Biegesteifigkeit, zu steigern. Solche verstärkten Polyurethane sind bereits als Schürzen, Schweller, Leisten oder Türabdeckungen und Kotflügel im Automobilaußenbereich im Einsatz. Charakteristisch für die eingesetzten Materialien ist ein relativ hohes Ausdehnungsverhalten, das heißt, große lineare thermische Ausdehnungskoeffizienten (α-Werte), die stark von denen der üblicherweise eingesetzten Metalle abweichen, sowie eine höhere Dichte. Im Vordergrund bei diesen Artikeln stehen Oberflächenqualitäten mit geringen Werten für die Kurz- und Langwelligkeit, ermittelt nach dem bekannten Wave-Scan-Verfahren.

Um in diesem Fall exzellente Oberflächenqualitäten mit niedrigen Werten für die Lang- und Kurzwelligkeit zu erreichen, müssen die Artikel gegebenenfalls einer Oberflächennachbehandlung unterzogen werden.

Um alle die vorgenannten Nachteile zu vermeiden, wurden nun PUR-Verbundteile mit integrierten class-A-Deckschichten mit sehr hohem Biegesteifigkeits-Niveau, geringem Ausdehnungsverhalten (α-Wert im Bereich von 1 bis 15 x 10⁻⁶ m · K⁻¹· m⁻¹), niedriger Dichte und hoher Oberflächenqualität entwickelt. Ähnliche Verbundteile sind bereits im Status-Report "Structhan®, ein Faserverbundwerkstoff mit Zukunft" der Bayer AG, Bestell-Nr. PU 52231, und dem Sonderdruck "PUR-Faserverbundwerkstoffe für den Leichtbau im Fahrzeuginnenraum" der Bayer AG, Bestell-Nr. PU 52248 beschrieben.

Es wurde gefunden, dass diese PUR-gebundenen Composites höhere Biegesteifigkeiten bei niedrigerer Dichte als die eingesetzten Deckschichten aufweisen.

Gegenstand der Erfindung ist ein Verbundteil aus
A) einer Kernschicht,
B) beidseitig der Kernschicht angeordneten Faserschichten, die mit einem Polyurethanharz (P) getränkt sind,
C) einer Deckschicht mit class-A-Oberflächenqualität auf einer der Faserschichten und
D) gegebenenfalls einer Dekorschicht auf der zweiten Faserschicht.

Gegenstand der Erfindung ist ebenfalls ein Einstufenprozess zur Herstellung eines Verbundteils mit Deck- und ggf. Dekorschicht zur Herstellung der erfindungsgemäßen Verbundteile. Für die Fertigung der Artikel mit den angesprochenen Verstärkungsstoffen kommen als Verarbeitungstechnik in Frage: NafpurTec-Verfahren, LFI/FipurTec- bzw. Interwet-Verfahren und Laminierverfahren. Der Verbundwerkstoff wird bei Formtemperaturen von 60-140°C hergestellt.

Das Polyurethanharz (P) ist erhältlich durch Umsetzung von
1. mindestens einer Polyolkomponente mit einer durchschnittlichen OH-Zahl von 300 bis 700, die mindestens ein kurzkettiges und ein langkettiges Polyol enthält, wobei die Ausgangspolyole eine Funktionalität von 2-6 aufweisen,
2. mindestens einem Polyisocyanat,
3. Wasser,
4. Aktivatoren,
5. Stabilisatoren sowie
6. gegebenenfalls weiteren Hilfs-, Trenn- und Zusatzmitteln.

- Als Polyolkomponente eignen sich Polyole mit mindestens zwei gegen Isocyanatgruppen reaktiven H-Atomen; vorzugsweise werden Polyesterpolyole und Polyetherpolyole eingesetzt.
- Bevorzugt werden erfmdungsgemäß höherkernige Isocyanate der Diphenylmethandiisocyanat-Reihe (pMDI-Typen), deren Prepolymere oder rohes MDI eingesetzt.
- Wasser wird in Mengen von 0,1-3,0, bevorzugt 0,3-2,0 Teile auf 100 Teile der Polyolformulierung eingesetzt.
- Zur Katalyse werden die an sich üblichen Aktivatoren für die Treib- und Vernetzungsreaktion wie Amine oder Metallsalze verwendet.
- Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z.B. in US-PS 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 25 58 523. Geeignet sind auch andere Organopolysiloxane, oxyethylierte Alkylphenole, oxyethylierte Fettalkohole, Paraffinöle, Ricinusöl- bzw. Ricinolsäureester, Türkischrotöl und Erdnussöl und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile des Polyols angewandt
- Der Reaktionsmischung zur Herstellung der Polyurethanharze können gegebenfalls weitere Hilfs-, Trenn- und Zusatzmittel einverleibt werden, beispielsweise oberflächenaktive Zusatzstoffe, wie Emulgatoren, Flammschutzmittel, Keimbildungsmittel, Oxidationsverzögerer, Gleit- und Entformungsmittel, Farbstoffe, Dispergierhilfen und Pigmente.
- Die Komponenten werden in solchen Mengen zur Umsetzung gebracht werden, dass das Äquivalenzverhältnis der NCO-Gruppen der Polyisocyanate a) zur Summe der gegenüber Isocyanatgruppen reaktiven Wasserstoffe der Komponenten b) und c) sowie gegebenenfalls e) 0,8:1 bis 1,4:1, vorzugsweise 0,9:1 bis 1,3:1 beträgt.

Als Material für die Kernschicht A) können thermoformbare PUR-Schaumstoffe, Papier-, Metall- oder Kunststoffwaben eingesetzt werden.

Als Fasermaterial B) können Glasfasermatten, Glasfaservliese, Glasfaserwirrlagen, Glasfasergewebe, geschnittene oder gemahlene Glas- oder Mineral-Fasern, Naturfasermatten und -gewirke, geschnittene Naturfasern, sowie Fasermatten, -vliese und -gewirke auf der Basis von Polymer-, Kohlenstoff- bzw. Aramidfasern sowie deren Mischungen eingesetzt werden.

Geeignete Deckschichten C) sind Metall-Folien oder -Bleche sowie kompakte thermoplastische Kunststoff-Composites aus PMMA (Polymethylmethacrylat), ASA (Acrylester modifiziertes Styrol-Acrylnitril-Terpolymer), PC (Polycarbonat), PA (Polyamid), PBT (Polybutyleneterephthalat) und/oder PPO (Polyphenylenoxid) für Außenanwendungen. Die Deckschicht kann lackiert, lackierfähig eingestellt oder eingefärbt sein.

Als Dekorschicht D) können Textilstoffe, die gegen eine Durchschäumung mit TPU-Folie gesperrt sind, kompakte oder geschäumte Kunststofffolien sowie Sprüh- oder RIM-Häute aus Polyurethan verwendet werden.

Die Faserkomponente der Faserschicht B) kann als Gewebe auf die Kernschicht A) aufgelegt oder im Falle der geschnittenen oder gemahlenen Fasern mit der Polyurethankomponente oder über die Polyurethankomponente (P) eingebracht oder aufgesprüht werden.

Die Herstellung der erfindungsgemäßen Verbundteile kann so durchgeführt werden, dass zunächst auf die Kernschicht A) beidseitig eine Faserschicht B) aufgebracht und mit den Polyurethanausgangskomponenten beaufschlagt wird. Alternativ kann der Verstärkungsstoff auch über den Polyurethanrohstoffstrom durch geeignete Mischkopftechnik eingebracht werden. Die Polyurethanharze können nach den in der Literatur beschriebenen Verfahren, z.B. dem one-shot- oder dem Prepolymer-Verfahren, mit Hilfe von dem Fachmann im Prinzip bekannten Verarbeitungsvorrichtungen hergestellt werden. Vorzugsweise werden sie nach dem one-shot-Verfahren hergestellt.

Der so hergestellte Rohling wird in ein Formwerkzeug überführt, das die Deckschicht C) und gegebenenfalls eine Dekorschicht D) enthält, und durch Zufahren der Form und durch die Reaktion der PUR-Rohstoffkomponenten mit der Deckschicht C) und gegebenenfalls Dekorschicht D) verbunden. Der Rohling kann auch durch geeignete Techniken direkt im Formwerkzeug erzeugt werden.

Die erfindungsgemäßen Verbundwerkstoffe zeichnen sich durch niedrige Dichten im Bereich von ca. 400 bis 700 kg/m³ , hohe Biegesteifigkeiten im Bereich von ca. 0,5 bis 5,2 x 10⁷ N·mm² und hervorragende Oberflächenqualität aus. Insbesondere besitzen sie im Vergleich zu herkömmlichen Kunststoffen und Metallen, die im Außenanwendungsbereich eingesetzt werden, wie Polycarbonat/Acrylnitril-Budatien-Styrol (PC/ABS), Polypropylen, Noryl® (Blend aus Polyphenylenoxid und Polyamid), SMC (sheet molding compounds) oder Aluminium- bzw. Stahl-Blech bei vergleichbaren Biegesteifigkeiten wesentlich niedrigere Flächengewichte.

Anwendungsfelder der erfindungsgemäßen Verbundwerkstoffe sind Dach-, Motorhauben-, Heckklappen-, Tür- oder Bodenplatten-Module im Automobilbereich.

### Beispiele

| Ausgangsmaterialien: | |
|---|---|
| Polyol 1 | Polyetherpolyol der OH-Zahl 865, hergestellt durch Addition von PO an Trimethylolpropan |
| Polyol 2 | Polyetherpolyol der OH-Zahl 1000, hergestellt durch Addition von PO an Trimethylolpropan als Starter. |
| Polyol 3 | Polyetherpolyol der OH-Zahl 42, hergestellt durch Addition von 86% PO und 14 % EO an Propylenglykol als Starter. |
| Polyisocyanat | Polymeres MDI mit einem Isocyanatgehalt von 31,5 Gew.-% (Desmodur® 44V20L, Bayer AG). |
| Stabilisator | Siliconstabilisator Polyurax® SR242, Osi Crompton Witco Specialities, D 60318 Frankfurt, Humboldstr. 12 |
| Katalysator | Aminkatalysator Thancat® AN10, Air Products GmbH, D-45527 Hattingen |
| Farbstoff | Baydur® Schwarzpaste DN, Bayer AG |

| Polyurethan-Rezeptur 1: | |
|---|---|
| Polyol 1 | 30 Gew.-Teile |
| Polyol 2 | 20 Gew.-Teile |
| Polyol 3 | 33 Gew.-Teile |
| Katalysator | 2,8 Gew.-Teile |
| Stabilisator | 1,3 Gew.-Teile |
| Essigsäure | 0,3 Gew.-Teile |
| Wasser | 1,4 Gew.-Teile |
| Farbstoff | 3,3 Gew.-Teile |
| Polyisocyanat | 140 Gew.-Teile |

Das Polyolgemisch 1-3 hat eine durchschnittliche OH-Zahl von 568 mg KOH/g.

### Beispiel 1

Auf eine Kernlage (A), Papierwabe des Typs Wellpappe 5/5 mit einer Dicke von 12 mm und einem Flächengewicht von 960 g/m², wurden beidseitig Schnittglasfasermatten (B) mit einem Flächengewicht von 450 g/m² aufgelegt und bei Raumtemperatur durch Aufsprühen von insgesamt 1150 g der Polyurethan-Rezeptur 1 (P) beaufschlagt. Dieser Sandwichaufbau wurde in einem Werkzeug, in dem im Unterteil ein mit Standardabdecklack gecoatetes Aluminiumblech als Deckschicht (C) mit einer Dicke von 0,85 mm, einer Dichte von 2640 kg/m³ und einer Ausgangsbiegesteifigkeit von 2,18 x 10⁵ N·mm² und im Oberteil ein mit PUR-Folie gegen Durchschäumen gesperrtes Textildekor als Dekorschicht (D) mit einem Flächengewicht von ca. 180 g/m² eingelegt waren, eingebracht. Anschließend wurde in dem auf 110°C beheizten Werkzeug dieses Gelege auf eine Wandstärke von 11,7 mm verpresst. Nach einer Presszeit von 240 sec wurde das Werkzeug geöffnet und das fertige Verbundteil entnommen. Das Verbundteil wies eine Dichte von 444 kg/m³ und eine Biegesteifigkeit von 5,20 x 10⁷ N·mm² auf.

Gegenüber der Deckschicht (C) konnte im erfindungsgemäßen Verbundteil die Biegesteifigkeit um einen Faktor von mehr als 200 vergrößert und die durchschnittliche Dichte von 2640 kg/m³ auf 444 kg/m³ erniedrigt werden.

### Beispiel 2

Die Herstellung erfolgte analog Beispiel 1, jedoch wurde als Kernlage (A) eine Papierwabe des Typs Wellpappe 5/5 mit einer Dicke von 5 mm und einem Flächengewicht von 395 g/m² eingesetzt und die beidseitig aufgebrachten Schnittglasfasermatten mit 1000 g der Polyurethan-Rezeptur 1 (P) beaufschlagt. Die Dicke des als Deckschicht (C) eingesetzten Aluminiumblechs betrug 0,35 mm und wies eine Dichte von 2540 kg/m³ und eine Ausgangsbiegesteifigkeit von 1,52 x 10⁴ N·mm² auf. Als Dekormaterial (D) wurde ein gegen Durchschäumen gesperrtes Textil vom Flächengewicht 180 g/m² verwendet. Das nach Verpressen bei 110°C erhaltene Verbundteil der Dicke von 4,9 mm wies eine Dichte von 654 kg/m³ und eine Biegesteifigkeit von 8,56 x 10⁶ N· mm² auf. Die Ausgangsbiegesteifigkeit der Deckschicht (C) ist um den Faktor 560 vergrößert worden.

### Beispiel 3

Die Herstellung erfolgte analog Beispiel 1, jedoch wurde als Kernlage (A) eine Papierwabe des Typs Wellpappe 5/5 mit einer Dicke von 7 mm und einem Flächengewicht von 560 g/m² eingesetzt und die beidseitig aufgebrachten Schnittglasfasermatten mit 900 g der Polyurethan-Rezeptur 1 (P) beaufschlagt. Als Deckschicht (C) wurde eine kompakte, tiefgezogene Mehrschicht-Thermoplastfolie aus ASA/PMMA mit einer Dicke von 1,40 mm und einer Ausgangsbiegefestigkeit von 3,43 x 10⁴ N·mm² eingesetzt. Als Dekormaterial (D) wurde ein gegen Durchschäumen gesperrtes Textil vom Flächengewicht 180 g/m² verwendet. Die Werkzeugtemperatur beim Pressvorgang betrug ca. 60°C auf der Deckschichtseite und ca. 90°C auf der Dekorseite. Das erhaltene Verbundteil der Dicke von 7,2 mm wies eine Dichte von 517 kg/m³ und eine Biegesteifigkeit von 5,71 x 10⁶ N· mm² auf.

Die Biegesteifigkeit der Deckschicht (C) ist infolge des Compositaufbaus mit PUR-Verbund erheblich vergrößert worden, und zwar um den Faktor 166.

## Patentansprüche

1. Verbundteil aus
A) einer Kernschicht,
B) beidseitig der Kernschicht angeordneten mit Polyurethanharz (P) getränkten Faserschichten,
C) einer Deckschicht mit class-A-Oberflächenqualität auf der einen Faserschicht und
D) gegebenenfalls einer Dekorschicht auf der zweiten Faserschicht.

2. Verfahren zur Herstellung von Verbundteilen gemäß Anspruch 1, bei dem auf eine Kernschicht A) beidseitig eine mit den Komponenten des Polyurethanharzes (P) getränkte Faserschicht B) aufgebracht wird und dieser Verbund in einem Formwerkzeug durch Zufahren der Form, Ausreagieren der Komponenten des Polyurethanharzes (P) und Anbinden an die Deckschicht C) und gegebenenfalls Dekorschicht D) zum Verbundteil verarbeitet wird.

3. Verwendung der Verbundteile gemäß Anspruch 1 zur Herstellung von Dach-, Motorhauben-, Heckklappen-, Tür- oder Bodenplatten-Modulen für Kraftfahrzeuge.
